# EUROPÄISCHE PATENTSCHRIFT

(11) **EP 1 600 760 B1**
(45) Veröffentlichungstag und Bekanntmachung des Hinweises auf die Patenterteilung: **28.12.2016**
(21) Anmeldenummer: 05007352.7
(22) Anmeldetag: 05.04.2005
(51) Int. Cl.: G01N 15/08, H01M 8/02

(54) **Verfahren und Vorrichtung zur Ermittlung von Mikrostrukturparametern von dünnen porösen Schichten**
Method and device for determining microstructural parameters of thin porous layers
Procédé et dispositif pour déterminer les paramètres microstructurels des couches minces poreuses

(30) Priorität: 29.05.2004 DE 102004026444
(43) Veröffentlichungstag der Anmeldung: 30.11.2005
(73) Patentinhaber: Forschungszentrum Jülich GmbH, 52425 Jülich (DE)
(72) Erfinder: Wedershoven, Christian, 52064 Aachen (DE); Vinke, Izaak C., 52428 Jülich (DE); Rommerskirchen, Richard, 52428 Jülich (DE); de Haart, Lambertus G.J., 6414 JE Heerlen (NL); Gubner, Andreas, 52382 Niederzier (DE)

(56) Entgegenhaltungen:
- EP-A1- 1 255 104
- WO-A-99/66306
- WO-A-2005/106468
- GB-A- 2 321 527
- NL-C- 100 068
- US-B1- 6 178 808

## Beschreibung

Die Erfindung betrifft ein Verfahren zur Ermittlung von Mikrostrukturparametern einer porösen Schicht, wie beispielsweise die Porosität oder einen gemittelten Porenradius. Ferner betrifft die Erfindung eine Vorrichtung zur Durchführung des vorgenannten Verfahrens.

### Stand der Technik

Um einen tieferen Einblick in die physikalisch-chemischen Vorgänge in einer Brennstoffzelle zu erhalten, werden häufig detaillierte Modellierungen der Einzelzelle durchgeführt. Einen wichtigen Einfluss haben dabei insbesondere die Stofftransportprozesse in den porösen Strukturen. Diese porösen Strukturen werden mit Hilfe von Mikrostrukturparametern beschrieben.

Zur Ermittlung von Mikrostrukturparametern einer porösen Schicht, wie beispielsweise der Porosität, des gemittelten Porenradius oder des Verhältnisses von Porosität zu Tortuosität, werden z. B. Diffusions- und Permeationsmessungen vorgenommen. Die Ermittlung der relevanten Parameter mit Hilfe dieser Messungen beruht dabei insbesondere auf dem Vergleich gemessener und berechneter Gasmengen, welche durch die zu charakterisierende poröse Struktur strömen.

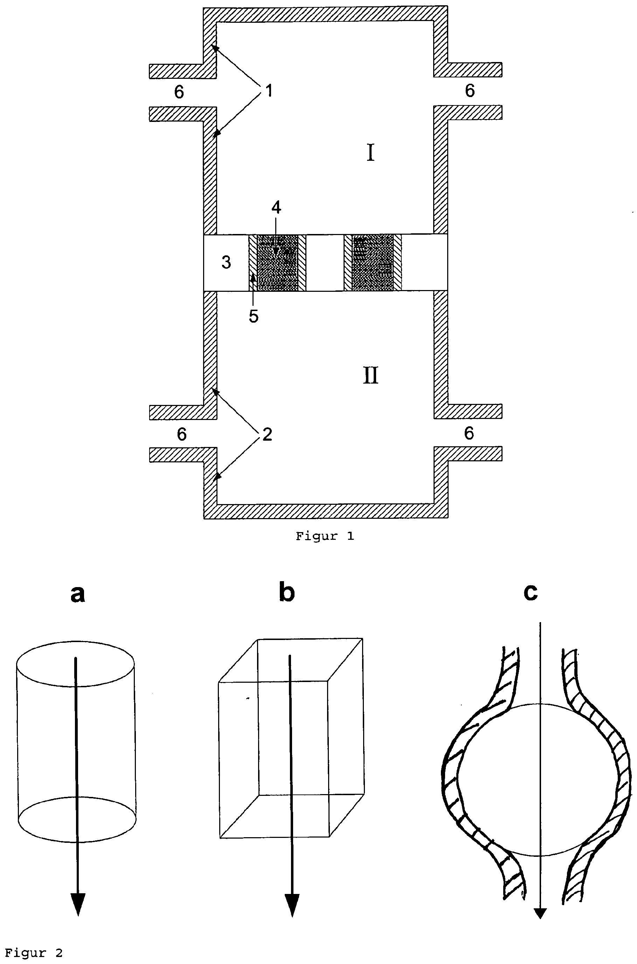

Die abgebildete Probenhaltevorrichtung gemäß Figur 1 stellt den Stand der Technik bezüglich der Einspanntechnik der Probenkörper dar [1-2]. In diesen Probenhalter können in der Regel nur Proben von porösen Materialien eingebunden werden, in denen sich der Gasstrom aufgrund ihrer Geometrie mit Hilfe einer eindimensionalen Betrachtung darstellen lässt. Beispiele solcher Geometrien sind in Figur 2 gegeben. Bei der Untersuchung von sphärischen Probenkörpern werden üblicherweise andere Bauformen der Diffusions- bzw. Permeationszelle verwendet.

Der Einsatz von Probenkörpern mit den in der Figur 2 aufgezeigten Geometrien ermöglicht aufgrund der eindimensionalen Beschreibung des Gasflusses einerseits eine einfache Konstruktion des Probenhalters, andererseits lässt sich der Gasfluss durch den porösen Körper auf analytische mathematische Weise beschreiben. Dies vereinfacht die Auswertung des Experiments.

In NL 100 068 C wird beispielsweise eine Vorrichtung zur Messung der Gasdurchlässigkeit von Filmen mit geringer Permeabilität offenbart, bei der Film auf einem porösen Träger angeordnet ist. Von oben zugefügtes Gas wird durch Anlegen eines Vakuums senkrecht durch den Film und den Träger geleitet.

Aus WO 99/66306 A ist eine Vorrichtung und ein Verfahren zur Messung von Transporteigenschaften poröser Materialien beschrieben. Die Vorrichtung umfasst zwei Klemmplatten, zwischen denen das zu untersuchende poröse Material eingeklemmt wird. Die Klemmplatten weisen jeweils Aussparungen auf, so dass das zu untersuchende Material auf jeder Seite Kontakt zu einen mit wenigstens einer Zuführungs- bzw. Abführungsleitung versehenen Gasraum hat. Während der Messung wird einem Gasraum unter definierten Bedingungen ein Gas zugeführt und der über das poröse Material stattfindende Druckverlust zwischen dem ersten und dem zweiten Gasraum ermittelt.

Eine Probenhaltervorrichtung und ein Verfahren zur Messung von Transporteigenschaften poröser Materialien ist ebenfalls aus WO 2002/106468 A bekannt. Die zweiteilige Vorrichtung umfasst ein erstes unteres Probenhalterteil mit einer zentralen Öffnung und einem Gasauslass sowie einer um die Bohrung angeordneten Dichtung, sowie ein zweites, flexibles oberes Probenhalterteil mit einer zentralen Öffnung und einem Gaseinlass sowie einer um die Bohrung angeordneten Dichtung. Durch Absenken des oberen Probenhalterteils kann eine zu untersuchende Probe zwischen der Dichtung des ersten und des zweiten Probehalterteils eingeklemmt werden. Gas kann durch den Gaseinlass in das obere Probenhalterteil und über die zentrale Bohrung zu dem zu untersuchenden Material geleitet werden, dieses senkrecht durchströmen und durch die zentrale Bohrung des unteren Probehalterteils und den Gasauslass wieder entweichen.

In US 6,178808 B1 wird eine Vorrichtung und ein Verfahren zur Messung der hydraulischen Leitfähigkeit einer geologischen Probe offenbart. Die Vorrichtung umfasst ein geschlossenes Pumpsystem, in dem die Probe in einem konstanten Flüssigkeitsvolumen angeordnet ist. Dabei wird über eine HG-Säule wird eine konstante Druckdifferenz über die Probe eingestellt.

Aus EP 1 255 104 A1 ist eine Vorrichtung zur Messung der Dampfdurchlässigkeit eines flächigen Produktes bekannt. Die Vorrichtung umfasst eine zweiteilige Messkammer mit Haltemitteln zur dichtenden Halterung eines flächigen Produktes, wobei das gehaltene flächige Produkt eine ebene Trennfläche zwischen einem ersten Messkammerteil und einem zweiten Messkammerteil bildet, die zur Aufnahme einer Flüssigkeit, bzw. eines Gases ausgebildet sind.

Eine Vorrichtung und ein Verfahren zur Verbesserung der Gasdichtigkeit von halb-durchlässigen Membranen sind aus GB 2 321 527 A bekannt. Die Vorrichtung umfasst ein festes, zum Beispiel zylindrisches, Gefäß zur Aufnahme der geologischen Probe, wobei die Probe seitlich durch eine flexible Hülle und an den gegenüberliegenden Enden durch halb-durchlässige Membranen begrenzt wird. Durch Zuführung von ein oder mehrphasigen Flüssigkeiten unter Druck kann beispielsweise die Wasserabführung in der geologischen Probe ermittelt werden

Mit den bisherigen Probenhaltern ist es technisch nicht möglich, Proben in Form von porösen Schichten auf gasdichten Trägern zu vermessen.

### Aufgabe und Lösung

Die Aufgabe der Erfindung ist es, ein zerstörungsfreies Verfahren zur Bestimmung von Mikrostrukturparametern für dünne poröse Schichten auf gasdichten Trägern zur Verfügung zu stellen, welches insbesondere für dünne Schichten mit einer Dicke von weniger als 100 µm geeignet ist. Ferner ist es die Aufgabe der Erfindung, eine zur Durchführung des vorgenannten Verfahrens geeignete Probenhalterung zu schaffen.

Die Aufgaben der Erfindung werden gelöst durch ein Verfahren mit der Gesamtheit an Merkmalen gemäß Hauptanspruch, sowie durch eine Vorrichtung mit der Gesamtheit an Merkmalen gemäß Nebenanspruch. Vorteilhafte Ausgestaltungen des Verfahrens und/oder der Vorrichtung finden sich in den jeweils rückbezogenen Unteransprüchen.

### Gegenstand der Erfindung

Die Erfindung betrifft ein zerstörungsfreies Verfahren zur Ermittlung von Mikrostrukturparametern, insbesondere die Ermittlung dieser Parameter für eine dünne poröse Schicht auf einem dichten Träger. Ferner betrifft die Erfindung eine Vorrichtung zur Durchführung des vorgenannten Verfahrens.

Unter Mikrostrukturparametern im Sinne dieser Erfindung werden insbesondere die Parameter des Verhältnisses von Porosität zu Tortuosität und/oder gemittelter Porenradius verstanden. Aufgrund des eingesetzten Messverfahrens werden dabei nur die Parameter von durchgängigen Poren ermittelt, die einem Transport von Gasen zugänglich sind.

Bei den bekannten Messverfahren werden zur Ermittlung von Mikrostrukturparametern während einer Diffusions- und/oder einer Permeationsmessung ein oder mehrere Gase oder Gasgemische senkrecht durch die zu untersuchende Probe geleitet. Im Unterschied dazu weist das erfindungsgemäße Verfahren das Merkmal auf, dass der reale Gasstrom in einer gekrümmten Richtung durch die Probe geleitet wird, insbesondere fließt der Nettogasstrom in lateraler Richtung durch die poröse Schicht, d. h. parallel zur Oberfläche der porösen Schicht. Dabei tritt das Gas in einem begrenzten Teil durch eine Oberfläche in den porösen Körper bzw. die Schicht ein, und tritt an einer anderen Stelle durch dieselbe Oberfläche auch wieder aus. Die zu vermessende poröse Schicht ist dabei auf einem gasundurchlässigen Träger angeordnet, so dass ein senkrecht zur Schichtoberfläche verlaufender Gasfluss verhindert wird. Die Messung selbst erfolgt analog zu den bekannten Verfahren, indem mit Hilfe von zwei an die poröse Schicht angrenzenden Gasräumen aufgrund eines Druck oder Konzentrationsunterschiedes ein Gastransport durch die poröse Schicht bewirkt wird. Durch eine geeignete Messeinrichtung wird der Gasstrom ermittelt und aus den Rahmenbedingungen (z.B. Druckunterschied, Konzentrationsunterschied, Probengeometrie, Durchtrittsgeometrie) die Mikrostrukturparameter ermittelt.

Das erfindungsgemäße Messverfahren wird vorteilhaft in einer Anordnung durchgeführt, wie sie nachfolgend beschrieben wird.

Eine zur Durchführung des vorgenannten Verfahrens geeignete Vorrichtung weist einen ersten Teil des Probenhalters auf, auf dem die poröse Schicht, die selbst auf einer gasundurchlässigen Schicht angeordnet ist, während der Messung aufliegt. Der erste Teil des Probenhalters ist vorteilhaft planar und weist insbesondere eine Fläche zur Aufnahme der Proben von mindestens 1 cm² auf.

Ein Dichtkörper, der während der Messung auf der porösen Schicht aufliegt, teilt den Raum, der sich oberhalb der porösen Schicht befindet in wenigstens zwei separate Gasräume. Die Aufteilung der Gasräume erfolgt derart, dass ein Gaseintritt und ein Gasaustritt an verschiedenen Stellen durch dieselbe Oberfläche der porösen Schicht ermöglicht wird. Das bedeutet, dass der Dichtkörper während der Messung nicht die gesamte freie Oberfläche der porösen Schicht bedeckt. Für die Auswertung ist es erforderlich, dass die genaue Auflagefläche des Dichtelements auf der porösen Schicht bekannt ist. Die Auflagefläche des Dichtungsrings wird unter Berücksichtigung der Abmessungen von Probenhalter und Probe und den Verformungseigenschaften des Dichtungsrings berechnet. Auf diese Weise sind definierte Randbedingungen geschafften, mit deren Hilfe der Gasfluss durch die poröse Schicht berechnet werden kann.

Das Dichtelement selbst wird insbesondere durch einen zweiten Teil des Probenhalters während der Messung auf der porösen Schicht fixiert.

Die Regelung der Gasströme sowie die Messung selbst können vorteilhaft wie bei bekannten Diffusions- und Permeationsmessungen erfolgen.

Typische Probenmaße nach dem Stand der Technik sind:

| | |
|---|---|
| Durchmesser bzw. | Breite/Tiefe: 3 - 10 mm und |
| | Höhe: 1 - 10 mm. |

Die Größe der Diffusionsströme werden durch die zur Verfügung stehende durchströmte Fläche, die Mikrostrukturparameter und die Randbedingung, das bedeutet durch den Molenbruch jeder der beiden Spezies an der jeweiligen Ein- und Austrittsfläche bestimmt. Die gemessenen Nettodiffusionsströme liegen in einem Bereich von ca. 0,1 - 15 ml/min

Die verwendeten Gase bei Messungen mit einzelnen Gasen und Gasgemischen sind beispielsweise H₂, He, N₂ oder Ar.

Die Größe der durchströmten Oberflächen der porösen Strukturen kann von einigen Quadratmillimetern für sehr dünne Schichten (µm-Bereich) bis hin zu einigen hundert Quadratzentimetern für sehr dicke Schichten (mm Bereich) liegen.

Es können poröse Strukturen mit mittleren Porenradien in einem Bereich von ca. 0,01 - 10 µm und Porositäten von ca. 10 - 70 % vermessen werden.

Mit diesem Verfahren können bei geeigneten Dichtelementen Schichten von einigen µm bis zu einigen 1000 µm charakterisiert werden.

### Spezieller Beschreibungsteil

Nachfolgend wird der Gegenstand der Erfindung anhand von Figuren näher erläutert, ohne dass der Gegenstand der Erfindung dadurch beschränkt wird. Es zeigen:
- Figur 1:: Schematischer Aufbau einer Diffusions- bzw. Permeationszelle gemäß dem Stand der Technik.
- Figur 2:: Geometrien von Probenkörpern nach dem derzeitigen Stand der Technik.
a) zylindersymmetrischer Probenkörper,
b) quaderförmiger Probenkörper,
c) sphärischer Probenkörper.
- Figur 3:: Messverfahren zur Bestimmung von Mikrostrukturparametern an dünnen, porösen Schichten.
a) gemäß dem Stand der Technik,
b) erfindungsgemäß, insbesondere für auf einem Träger angeordnete Schichten.
- Figur 4:: Ausführungsform einer zur Durchführung des erfindungsgemäßen Verfahrens geeigneten Messvorrichtung.

In den Figuren bedeuten
I, II Gas, Gase oder Gasgemische mit unterschiedlichen Drücken und/oder Konzentrationen
   1 Bewandung erster Gasraum
   2 Bewandung zweiter Gasraum
   3 Metallischer Probenhalter
   4 Probenkörper
   5 Dichtungen, z. B. Silikon
   6 Gasein- bzw. auslässe
   7 Einfassung
   8 Gasdichter Träger oder Rest des Schichtsystems
   9 Erster Teil des Probenhalters
   10 Zweiter Teil des Probenhalters
   11 Aussparungen des ersten Teil des Probehalters
   12 Bohrungen des zweiten Teil des Probenhalters

In Figur 1 ist eine schematische Versuchsanordnung für eine Diffusions- bzw. Permeationsmessung zur Ermittlung von Mikrostrukturparametern gemäß dem derzeitigen Stand der Technik dargestellt.

Figur 2 zeigt drei Beispiele für Probengeometrien, wie sie nach derzeitigem Stand der Technik für die Bestimmung von Mikrostrukturparametern eingesetzt werden. In solchen Proben mit einer solchen Geometrie lässt sich der Gasstrom mit Hilfe einer eindimensionalen Betrachtung darstellen. Das führt in der Regel zu einer relativ einfachen Auswertung solcher Experimente.

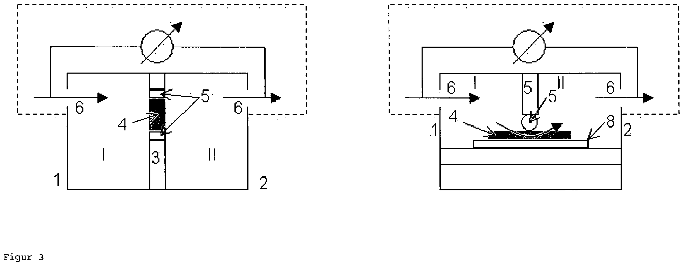

In Figur 3 sind die Messprinzipien nach dem Stand der Technik und nach dem erfindungsgemäßen Verfahren gegenübergestellt. Die Rahmenbedingungen, wie beispielsweise die Wahl der eingesetzten Gase, die Einstellung von Gasflüssen, bzw. drücken, die Ermittlung der Gasflüsse unterscheiden sich dabei nicht.

Während bislang das Gas die Probe transversal durchströmt (a), wird bei der Erfindung eine laterale Strömung durch die poröse Schicht erzwungen (b). Zentrales Element der erfindungsgemäßen Anordnung ist der Dichtungskörper. Er muss die Gasräume gasdicht mit bekannter Auflagefläche auf der Probenoberfläche trennen.

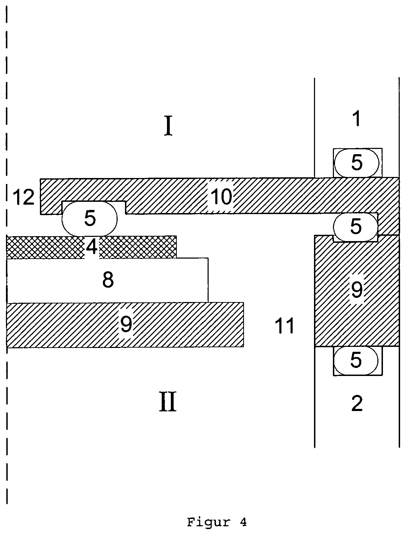

Eine mögliche Ausführungsform einer Vorrichtung wird in Figur 4 dargestellt. Das dort gezeigte Konstruktionsvorbild eines Probenhalters ermöglicht die Durchführung des erfindungsgemäßen Messverfahrens. Der dargestellte Probenhalter ist vorteilhaft zur Einbindung in eine dem derzeitigen Stand der Technik entsprechende Versuchsanordnung konstruiert.

Die Probenhaltevorrichtung selbst besteht aus einem ersten und einem zweiten Teil des Probenhalters. Das zu untersuchende Schichtsystem befindet sich mit der zu untersuchenden porösen Schicht nach oben in dem ersten Teil des Probenhalters. Der zweite Teil des Probenhalters besitzt eine Bohrung, der erste Teil des Probenhalters Aussparungen, durch welche die Gase oder Gasgemische des ersten bzw. zweiten Gasraumes auf die Oberfläche der porösen Schicht gelangen können. Ein Dichtungsring (O-Ring), welcher bei montiertem Versuchsaufbau zwischen zweitem Teil des Probenhalters und poröser Schicht eingepresst ist, trennt die für die Gase oder Gasgemische unterschiedlichen Drucks oder Konzentrationen zugängigen Bereiche des ersten (I) und zweiten (II) Gasraumes. Der Gasfluss findet durch die poröse Schicht unterhalb des Dichtungsringes statt.

Anstelle des Dichtungsrings kann einen anderen Dichtungskörper, z.B. eine Dichtungsscheibe, verwendet werden, welche eine definierte Auflagefläche auf der Oberfläche der porösen Schicht besitzt. Die Wahl des Materials und die Geometrie des Dichtungselementes sollten vorteilhaft auf die poröse Schicht abgestellt sein, damit ein ausreichend großer Gasfluss erfolgen kann. Durch die Größe des Gasflusses wird die Messgenauigkeit des Messverfahrens beeinflusst, wobei ein größerer Gasfluss regelmäßig eine bessere Genauigkeit bewirkt.

Geeignete Vorrichtungen sind natürlich nicht auf eine rotationssymmetrische Ausgestaltung beschränkt. Diese wurde im Ausführungsbeispiel nur gewählt, da sie vorteilhaft in eine schon bestehende Vorrichtung gemäß dem Stand der Technik eingebunden werden konnte.

## Patentansprüche

1. Verfahren, zur Durchführung von Permeations- und Diffusionsmessungen zur Ermittlung von Mikrostrukturparametern für eine poröse Schicht, bei dem ein Gas durch die poröse Schicht (4) geleitet wird, und der Gasfluss durch die poröse Schicht gemessen wird,
***dadurch gekennzeichnet,***
- **dass** die poröse Schicht (4) auf einem gasundurchlässigen Träger (8) angeordnet ist und eine Schichtdicke zwischen einigen µm und einigen 1000 µm aufweist,
- **dass** das Gas über einen ersten, an die poröse Schicht (4) grenzenden Gasraum in die poröse Schicht (4) eingeleitet wird, in einer Richtung parallel zur Oberfläche der porösen Schicht durch die poröse Schicht (4) weitergeleitet wird, und über einen zweiten an die poröse Schicht (4) grenzenden Gasraum II wieder verlässt,
- wobei der erste und der zweite Gasraum an dieselbe Oberfläche der porösen Schicht (4) angrenzen und durch ein auf der Oberfläche der porösen Schicht (4) aufliegendes Dichtelement (5) gasdicht getrennt werden.

2. Vorrichtung zur Durchführung von Permeations- und Diffusionsmessungen zur Ermittlung von Mikrostrukturparametern für eine poröse Schicht (4),
- mit einem zweiteiligen Probehalter (9, 10) zur Aufnahme der porösen Schicht (4) derart,
- dass sie zusammen mit einer Dichtung (5) zwei an die porösen Schicht (4) angrenzende abgeschlossene Gasräume (I, II) auszubilden vermag,
***dadurch gekennzeichnet,***
- **dass** ein erster Teil eines Probenhalters (9) vorhanden ist, auf dem ein gasundurchlässiger Träger (8) angeordnet ist, wobei die Oberfläche des gasundurchlässigen Trägers zur Aufnahme der porösen Schicht (4) mit einer Schichtdicke zwischen einigen µm und einigen 1000 µm vorgesehen ist,
- **dass** ein zweiter beweglicher Teil des Probenhalters (10) mit einem Dichtelement (5) vorhanden ist, wobei
- der zweite Teil des Probenhalters (10) das Dichtelement (5) auf der Oberfläche der porösen Schicht (4) zu fixieren vermag,
- und wobei die Fixierung des Dichtelements (5) auf der Oberfläche der porösen Schicht (4) zusammen mit den beiden Teilen des Probehalters (9, 10) zwei an die selbe Oberfläche der porösen Schicht (4) angrenzende abgeschlossene Gasräume (I, II) zu bilden vermag.

3. Vorrichtung nach Anspruch 2, bei dem der zweite Teil des Probenhalters (10) eine Bohrung (12) und der erste Teil des Probenhalters (9) eine Aussparung (11) zum Durchleiten von Gas aufweist.

4. Vorrichtung nach einem der Ansprüche 2 bis 3, mit einem Dichtungsring oder einer Dichtungsscheibe als Dichtelement (5).

5. Vorrichtung nach einem der Ansprüche 2 bis 4, bei dem der Probenhalter rotationssymmetrisch ausgebildet ist, wobei die Rotationsachse senkrecht zur Oberfläche des ersten Teils des Probenhalters (9) liegt.

## Claims

1. Method for carrying out permeation and diffusion measurements for determining microstructural parameters for a porous layer, in which a gas is conducted through the porous layer (4) and the gas flow through the porous layer is measured,
**characterised in that**
- the porous layer (4) is arranged on a gas-impermeable carrier (8) and has a layer thickness of between a few µm and a few 1000 µm,
- the gas is introduced into the porous layer (4) through a first gas space bordering on the porous layer (4), conveyed through the porous layer (4) in a direction parallel to the surface of the porous layer (4) and leaves again through a second gas space II bordering on the porous layer (4),
- in which the first and second gas space border on the same surface of the porous layer (4) and are separated in a gas-tight way by a sealing element (5) lying on the surface of the porous layer (4).

2. Device for carrying out permeation and diffusion measurements for determining microstructural parameters for a porous layer (4)
- with a two-part sample holder (9, 10) for accommodating the porous layer (4) in such a way that
- together with a seal (5) it may form two enclosed gas spaces (I, II) bordering on the porous layer (4),
***characterised in that***
- there is a first part of a sample holder (9), on which a gas-impermeable carrier (8) is arranged, in which the surface of the gas-impermeable carrier for accommodating the porous layer (4) has with a layer thickness of between a few µm and a few 1000 µm,
- there is a second moveable part of the sample holder (10) with a sealing element (5), in which
- the second part of the sample holder (10) may fix the sealing element (5) on the surface of the porous layer (4)
- and in which the fixing of the sealing element (5) on the surface of the porous layer (4) together with both parts of the sample holder (9,10) may form two enclosed gas spaces (I, II) bordering on the same surface of the porous layer (4).

3. Device according to claim 2, in which the second part of the sample holder (10) has a hole (12) and the first part of the sample holder (9) has a recess (11) for conducting gas.

4. Device according to one of claims 2 to 3 with a sealing ring or a sealing washer as sealing element (5).

5. Device according to one of claims 2 to 4, in which the sample holder is made rotationally symmetrical, in which the axis of rotation is perpendicular to the surface of the first part of the sample holder (9).

## Revendications

1. Procédé servant à effectuer des mesures de perméation et de diffusion afin de déterminer des paramètres de microstructure pour une couche poreuse, selon lequel un gaz est conduit à travers la couche poreuse (4) et le flux de gaz est mesuré à travers la couche poreuse,
**caractérisé en ce**
- **que** la couche poreuse (4) est disposée sur un support (8) ne laissant pas passer les gaz et présente une épaisseur de couche entre quelques µm et quelques 1 000 µm,
- **que** le gaz est acheminé dans la couche poreuse (4) par l'intermédiaire d'un premier compartiment à gaz jouxtant la couche poreuse (4), est transféré à travers la couche poreuse (4) dans une direction de manière parallèle par rapport à la surface de la couche poreuse pour la quitter à nouveau par l'intermédiaire d'un deuxième compartiment à gaz II jouxtant la couche poreuse (4),
- dans lequel le premier et le deuxième compartiment à gaz jouxtent la même surface de la couche poreuse (4) et sont séparés de manière étanche aux gaz à travers un élément étanche (5) reposant sur la surface de la couche poreuse (4).

2. Dispositif servant à effectuer des mesures de perméation et de diffusion afin de déterminer des paramètres de microstructure pour une couche poreuse (4),
- comprenant un porte-échantillon (9, 10) en deux parties servant à recevoir la couche poreuse (4) de telle manière
- qu'elle est en mesure de réaliser conjointement avec un joint d'étanchéité (5) deux compartiments à gaz (I, II) isolés jouxtant la couche poreuse (4),
**caractérisé en ce**
- **qu'**une première partie d'un porte-échantillon (9) est présente, sur laquelle un support (8) ne laissant pas passer les gaz est disposé, dans lequel la surface du support ne laissant pas passer les gaz est prévue afin de recevoir la couche poreuse (4) présentant une épaisseur de couche entre quelques µm et quelques 1 000 µm,
- **qu'**une deuxième partie mobile du porte-échantillon (10) pourvue d'un élément étanche (5) est présente, dans lequel
- la deuxième partie du porte-échantillon (10) est en mesure de fixer l'élément étanche (5) sur la surface de la couche poreuse (4),
- et dans lequel la fixation de l'élément étanche (5) sur la surface de la couche poreuse (4) est en mesure de former conjointement avec les deux parties du porte-échantillon (9, 10) deux compartiments à gaz (I, II) isolés jouxtant la même surface de la couche poreuse (4).

3. Dispositif selon la revendication 2, selon lequel la deuxième partie du porte-échantillon (10) présente un alésage (12) et la première partie du porte-échantillon (9) présente un évidement (11) servant au passage du gaz.

4. Dispositif selon l'une quelconque des revendications 2 à 3, comprenant une bague d'étanchéité ou une rondelle d'étanchéité en tant qu'élément étanche (5).

5. Dispositif selon l'une quelconque des revendications 2 à 4, selon lequel le porte-échantillon est réalisé de manière symétrique en rotation, dans lequel l'axe de rotation se situe de manière perpendiculaire par rapport à la surface de la première partie du porte-échantillon (9).
